# FASCICULE DE BREVET EUROPEEN

(11) **EP 1 439 973 B1**
(45) Date de publication et mention de la délivrance du brevet: **18.01.2006**
(21) Numéro de dépôt: 02774749.2
(22) Date de dépôt: 22.10.2002
(51) Int. Cl.: B60K 15/03

(54) **RESERVOIR A CARBURANT ET PROCEDE DE FABRICATION DE CE RESERVOIR**
KRAFTSTOFFTANK UND VERFAHREN ZUR SEINER HERSTELLUNG
FUEL TANK AND METHOD FOR MAKING SAME

(30) Priorité: 24.10.2001 FR 0113930
(43) Date de publication de la demande: 28.07.2004
(73) Titulaire: Inergy Automotive Systems Research (SA), 1120 Bruxelles (BE)
(72) Inventeur: GERARD, Yannick, B-1950 KRAAINEM (BE); LEONARD, Stéphane, B-1070 BRUXELLES (BE); DOUGNIER, François, B-3190 BOORTMEERBEEK (BE)
(74) Mandataire: Jacques, Philippe
(86) Numéro de dépôt international: PCT/EP2002/011905
(87) Numéro de publication internationale: WO 2003/035424

(56) Documents cités:
- EP-A- 1 179 445
- WO-A-01/07806
- WO-A-01/21428

## Description

La présente invention concerne un réservoir à carburant en matière plastique imperméable aux gaz et aux liquides.

Les réservoirs à carburant en matière plastique utilisés dans l'industrie, en particulier dans l'industrie automobile pour équiper les véhicules, comportent généralement un ou plusieurs accessoires qui leur sont associés tels que des clapets d'aération et de mise à l'air, des pipettes de prélèvement, des capteurs divers et leurs connexions diverses, les modules de jauge et de pompage, ...

Par ailleurs, les réservoirs à carburant doivent satisfaire à des normes d'étanchéité et de perméabilité de plus en plus draconiennes. Les limites d'émissions permises sont devenues tellement faibles que les pertes liées aux fuites et à la perméabilité des interfaces des accessoires avec le réservoir ont pris une proportion relative plus élevée dans les pertes totales du système réservoir + accessoires.

Il est connu par la demande de brevet WO O1/21428 d'obturer des ouvertures de réservoir en matière plastique multicouche pratiquées pour introduire ou fixer un accessoire dans le réservoir au moyen d'une plaque de structure multicauche compatible avec celle du réservoir, que l'on soude sur la paroi externe de ce dernier.

Dans ce document il est toutefois divulgué que les plaques utilisées sont de rigidité voisine de celle des parois du réservoir. Il en résulte que ces plaques ne peuvent être utilisées aisément lorsque la partie émergente d'un accessoire est trop volumineuse, ou que la surface émergente de l'accessoire est irrégulière.

De plus, malgré le bossage que l'on peut réaliser au voisinage du bord de la plaque pour réduire localement l'épaisseur des couches de matière plastique constituant la plaque multicouche, le niveau des pertes de carburant par émission à l'endroit de la soudure de la plaque sur le réservoir reste encore souvent trop élevé et dépasse parfois encore les limites très basses imposées par les nouvelles normes environnementales.

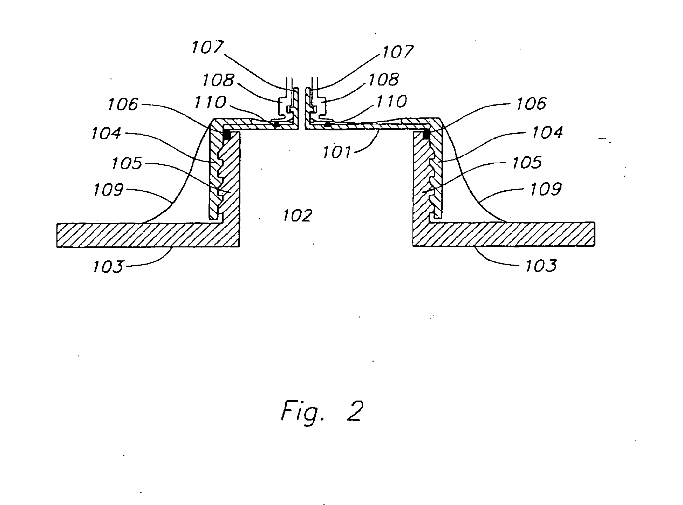

Il est également connu du document WO 01/07806 de recouvrir d'un film souple (108), un accessoire (80) situé au moins en partie (94) à l'extérieur du réservoir, ledit film étant un film multicouche soudé par soudure thermique sur le réservoir sur sa périphérie (voir figure 2 et le texte s'y rapportant).

L'invention a pour objet de fournir un réservoir en matière plastique qui limite encore mieux les pertes de carburant aux interfaces des accessoires avec l'environnement et, en particulier aux interfaces des accessoires avec le réservoir, dans le cas où ces accessoires traversent la paroi du réservoir.

Un autre avantage de l'invention est de permettre un système de fixation de l'accessoire sur le réservoir qui soit indépendante des exigences d'imperméabilité renforcée imposées à l'ensemble réservoir-accessoire.

A cet effet l'invention concerne un réservoir à carburant en matière plastique selon la revendication 1.

Par réservoir à carburant, on entend désigner tout type de réservoir capable de stocker un carburant liquide et/ou gazeux dans des conditions de pression et température variées. Plus particulièrement visés sont les réservoirs du type de ceux que l'on rencontre dans les véhicules automobiles. Dans le vocable "véhicule automobile", on entend inclure aussi bien les voitures, les motocyclettes et les camions.

Par matière plastique, on entend désigner toute matière comprenant au moins un polymère en résine de synthèse.

Tous les types de matière plastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymèms que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyhalogénures de vinyle, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits *supra.*

Les polyoléfines ont donné de bons résultats. Parmi les polyoléfines, le polyéthylène de haute densité (PEHD) est préféré.

L'invention s'adresse à un réservoir muni d'au moins un accessoire situé au moins en partie à l'extérieur du réservoir. Par accessoire, on entend désigner tout organe en général par lequel transite du liquide ou du gaz, ou est en contact avec du liquide ou du gaz et qui remplit une fonction particulière propre au dispositif à carburant dont fait partie le réservoir, en ce compris une fonction de transport de liquide et/ou de gaz entre deux autres organes.

Des exemples de tels accessoires comprennent, non limitativement, les accessoires suivants :
- un récipient contenant une composition chimique ou physique quelconque, notamment un canister d'absorption de vapeurs;
- une jauge à liquide ou a gaz;
- une connexion électrique aboutissant à une jauge à liquide ou à gaz;
- une pompe à liquide ou à gaz;
- un clapet de sécurité assurant la fermeture contrôlée du réservoir dans certaines situations particulières;
- une capacité vidangeable pour recueillir du liquide;
- une connexion électrique d'alimentation du moteur d'une pompe à liquide ou à gaz;
- une canalisation de liquide aboutissant à un dispositif d'alimentation d'un dispositif quelconque, notamment à un moteur;
- un dispositif de séparation liquide-vapeur.

Une combinaison quelconque d'au moins deux accessoires peut être utilisée, éventuellement en présence de plusieurs exemplaires d'un même accessoire.

Selon l'invention, l'accessoire est situé au moins en partie à l'extérieur du réservoir. L'accessoire peut être situé totalement à l'extérieur du réservoir. Un exemple est un module monté sur une paroi du réservoir et remplissant une fonction particulière impliquant la présence de carburant. L'accessoire peut aussi n'être situé qu'en partie hors du réservoir. Dans ce cas, il traverse la paroi de celui-ci et est muni d'une interface avec cette paroi qui assure une étanchéité relative aux gaz et aux liquides.

Selon l'invention, l'accessoire est recouvert d'un dispositif de protection qui améliore l'imperméabilité de l'ensemble réservoir-accessoire. En d'autres termes, la présence du dispositif de protection permet de réduire significativement les pertes de carburant à la surface de l'accessoire et/ou à l'interface de celui-ci avec le réservoir, dans le cas où l'accessoire traverse la paroi du réservoir.

Selon l'invention, ce dispositif est un film souple de structure multicouche, c'est-à-dire une structure laminée résultant de l'empilement de plusieurs couches comprenant chacune au moins une matière thermoplastique et dont l'épaisseur et la nature des couches sont telles que la flexibilité du film est sensiblement supérieure à celle de la paroi du réservoir. De préférence, le film souple est aisément déformable par simple action manuelle.

Le film souple présente une surface de natures diverses. Il peut, par exemple, constituer une surface convexe de forme délimitée par des lignes courbes plus ou moins circulaires, elliptiques ou au contraire comportant des angles vifs tels que des formes rectangulaires ou polygonales. Le film souple peut aussi présenter une surface non convexe comprenant au moins une surface convexe située à l'intérieur de la surface du film. Dans chacune de ces surfaces convexes incluses dans la surface non convexe du film, la structure multicouche s'interrompt pour laisser place à un vide enclavé dans la surface non convexe.

Selon l'invention, le film souple comprend au moins une couche barrière aux carburants. Par couche barrière aux carburants, on entend une couche imperméable aux carburants gazeux et liquides. La couche barrière comprend généralement une résine barrière. Toute résine barrière connue peut être présente dans la couche barrière, pour autant qu'elle soit efficace vis-à-vis des carburants fluides susceptibles de se trouver en contact avec le réservoir et/ou l'accessoire, en particulier des hydrocarbures et qu'elle soit compatible avec la technique de fabrication de la structure du film souple multicouche.

Parmi les résines possibles, on peut citer, de manière non limitative, les polyamides ou copolyamides et les copolymères statistiques d'éthylène et d'alcool vinylique. Un mélange de différentes résines barrières est aussi possible. De très bons résultats ont étés obtenus avec une couche barrière comprenant une résine barrière en copolymère statistique d'éthylène et d'alcool vinylique.

Le film souple peut avoir été obtenu par toute technique connue conduisant à la fabrication d'une structure multicouche mince et souple. Une technique possible est la technique d'extrusion d'un film multicouche au travers d'une filière plate. Une autre technique possible est le moulage par compression d'une plaque multicouche.

Le film souple recouvrant l'accessoire du réservoir selon l'invention est solidarisé avec le réservoir par une soudure. Le film souple peut, par exemple former une poche emprisonnant un accessoire, qui est soudée au réservoir.

Pour les réservoirs conformes à l'invention, la soudure du film souple est localisée sur la surface extérieure du réservoir, sur la totalité de la périphérie du film.

La soudure du film souple est du type soudure au rayonnement laser ou infrarouge. Le film peut avantageusement se trouver soudé sur une zone périphérique plus large qu'avec les autres types de soudure. Une largeur de 10 à 20 mm, par exemple est possible avec une soudure au rayonnement laser,

Selon un mode de réalisation préféré du réservoir conforme à l'invention, au moins une couche du film souple qui n'est pas dotée de fonction barrière est amincie à la périphérie du film sur une distance au moins égale à la largeur de la zone de soudure. Dans ce mode de réalisation, l'épaisseur de la couche non dotée de fonction barrière est diminuée sur la périphérie du film souple, de telle manière qu'au moins dans la zone soudée sur la paroi du réservoir, la section du canal de perméation du carburant soit réduite. De manière particulièrement préférée, la ou les couches non dotées de fonction barrière situées entre le réservoir et la couche barrière sont amincies.

Selon l'invention, la couche du film souple directement en contact avec la paroi du réservoir comprend une composition opaque au rayonnement laser ou au rayonnement infrarouge. Avantageusement, ce mode de réalisation fournit des réservoirs sur lesquels la soudure du film souple au rayonnement laser ou infrarouge est de meilleure qualité. Par composition opaque au rayonnement laser ou infrarouge, on entend une composition qui absorbe et/ou réfléchit une proportion importante de l'énergie du rayonnement laser ou infrarouge. Un exemple d'une telle composition ayant donné de bons résultats est une charge de noir de carbone. Cette composition est avantageusement répartie de manière homogène dans la matière polymérique de la couche directement en contact avec la paroi du réservoir.

Un autre mode de réalisation du réservoir conforme à l'invention, compatible aussi avec un ou plusieurs des modes décrits ci-dessus, est celui dans lequel le film souple comprend au moins une couche renfermant une polyoléfine. De préférence la polyoléfine est du polyéthylène de haute densité (PFHD). De manière particulièrement préférée, la couche renfermant du polyéthylène comprend aussi une composition opaque au rayonnement laser ou au rayonnement infrarouge. Une coucha de PEHD comprenant du noir de carbone a donné d'excellents résultats.

Le film souple peut recouvrir totalement l'accessoire de manière à éliminer tout contact direct de cet accessoire avec l'atmosphère extérieure au réservoir.

Alternativement, le film souple peut aussi être disposé de manière telle que l'accessoire comprend une canalisation qui débouche à l'atmosphère extérieure au réservoir et que le film ne laisse sortir vers cette atmosphère que la canalisation. Dans ce cas, on incorpore un moyen de solidarisation du film avec la canalisation à l'interface de sortie de celle-ci du film. Divers moyens de solidarisation sont possibles, pour autant qu'ils réalisent un contact d'étanchéité supérieure à celui de l'interface de l'extrémité de la canalisation située sous le film avec le réservoir ou un accessoire de celui-ci. Des exemples de solidarisation ayant donné de bons résultats sont un système d'encliquetage et un système de vis filetée sur la canalisation et d'une bague vissée sur celle-ci en emprisonnant le film dans le pas de la vis, entre la bague et le filet de la canalisation.

L'invention concerne aussi un procédé pour fabriquer un réservoir à carburant en matière plastique muni d'au moins un accessoire relié à l'espace intérieur du réservoir via au moins une ouverture dans la paroi de ce réservoir, l'accessoire et/ou l'ouverture étant recouverts d'un dispositif de protection étanche, ledit procédé étant conforme à la revendication 6.

Dans ce procédé, les termes communs ont la même signification que celle donnée supra dans la description du réservoir.

Selon un mode de réalisation du procédé conforme à l'invention, on prédécoupe le film et on le préforme par thermoformage, indépendamment du réservoir à carburant, avant de réaliser la soudure sur le réservoir au moyen du rayonnement laser ou infrarouge.

La préforme du film souple par thermoformage consiste à lui donner une forme qui, tout en restant souple et partant, modifiable dans une certaine mesure sans efforts mécaniques importants, s'approche de la forme de la surface extérieure de l'accessoire à protéger. De préférence, la préforme du film souple se fait de manière plastique.

Selon un autre mode de réalisation du procédé conforme à l'invention, compatible avec les modes décrits plus haut, avant de réaliser la soudure, on plaque le film sur l'accessoire et la paroi du réservoir dans le voisinage de cet accessoire au moyen d'un courant d'air chaud.

Avantageusement, on peut distribuer le courant d'air chaud au moyen d'un conduit de diamètre voisin de la largeur de l'accessoire et diriger ce conduit dans la direction de cet accessoire.

Les figures qui suivent ont pour but d'illustrer l'invention, sans chercher à en restreindre sa portée.

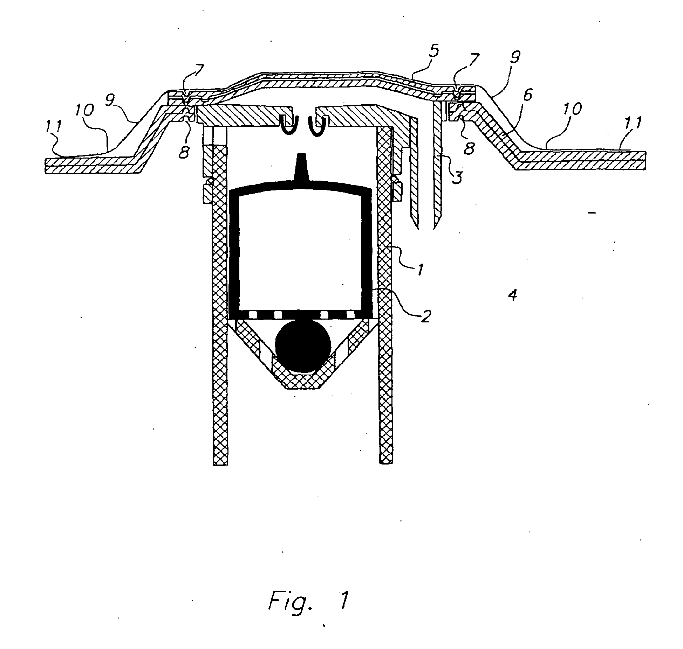

La figure 1 illustre un clapet (1) de ventilation de géométrie circulaire, comprenant une jupe (2) en polyacétal. Le clapet (1) est maintenu par encliquetage sur une pipette (3) dont l'embout est raccordé à une ligne de ventilation interne d'un réservoir multicouche (4) à carburant. Une plaque (5) de structure multicouche comportant 2 couches de PEHD emprisonnant une couche barrière en EVOH a été soudée par contact avec un miroir chauffant sur la surface externe (6) de la paroi du réservoir (5). Des embossages (7) et (8) ont été pratiqués dans la plaque (5) et la surface (6) de la paroi du réservoir (4) de manière à permettre le rapprochement des couches barrière lors de la soudure de la plaque (5) sur le réservoir (4) et la pipette (3). Un film multicouche (9) de forme circulaire à 3 couches, de 0,3 mm d'épaisseur totale comprenant une couche barrière en EVOH en sandwich entre deux couches en PEHD, la couche de PEHD faisant face au réservoir (4) étant chargée de 0,25 % en poids de noir de carbone a été posé par-dessus la plaque (5) et soudé au moyen d'un balayage d'un rayonnement laser à diode utilisée en mode pulsé (laser de type FAP, YAG de longueur d'onde de 809 nm et de 35 W de puissance) sur une zone circulaire (10), (11) d'une largeur de 16 mm de la paroi externe du réservoir entourant le clapet (1) et la pipette (3).

La figure 2 illustre le recouvrement d'une bonde de type bague-écrou utilisée pour la mise en place d'un module pompe-jauge d'un réservoir à carburant (103) en PEHD. Une platine (101) a été positionnée sur une ouverture (102) ménagée dans un réservoir (103). Une bague-écrou (104) vissée sur un embout (105) délimitant les parois de l'ouverture (102) permet la solidarisation de la platine (101) au réservoir (103). Un joint souple (106) assure un premier niveau d'étanchéité.

Une pipette (107) percée dans la platine (101) permet le raccord par encliquetage d'un raccord (108) de la canalisation de départ du carburant.

On a recouvert l'ensemble de l'embout (105), de la bague-écrou (104) et de la platine (101) d'un film (109) de 0,3 mm d'épaisseur de structure multicouche comprenant une couche barrière en EVOH prise en sandwich entre deux couches en PEHD dont la couche de PEHD en contact avec le réservoir est une couche en PEHD chargée de 0,3 % en poids de noir de carbone. Le film (109) est muni d'une ouverture autorisant le passage de la pipette (107) et a été soudé par la technique de balayage au moyen d'un rayonnement laser de même type et de même puissance que celui utilisé pour souder le film décrit à la figure 1. La soudure a été effectuée à la surface externe du réservoir (103) sur une zone circulaire de 15 mm de largeur. Un joint (110) permet d'assurer l'étanchéité autour de la pipette (107) lors de l'encliquetage de la partie femelle du raccord (108).

## Revendications

1. Réservoir à carburant (4, 103) en matière plastique muni d'au moins un accessoire (1, 101) situé au moins en partie à l'extérieur du réservoir (4, 103), l'accessoire (1, 101) étant recouvert d'un dispositif de protection améliorant l'imperméabilité de l'ensemble réservoir - accessoire, ce dispositif étant un film souple (9, 109) de structure multicouche, comprenant au moins une couche barrière aux carburants, qui est solidarisé avec le réservoir (4,103) par une soudure de type soudure au rayonnement laser ou infrarouge sur la surface extérieure de ce dernier sur la totalité de la périphérie du film (9, 109),
**caractérisé en ce que** la couche du film (9, 109) directement en contact avec la paroi du réservoir (4, 103) comprend une composition opaque au rayonnement laser ou au rayonnement infrarouge.

2. Réservoir selon la revendication précédente, **caractérisé en ce qu'**au moins une couche qui n'est pas dotée de fonction barrière est amincie à la périphérie du film (9, 109) sur une distance au moins égale à la largeur de la zone de soudure.

3. Réservoir selon une quelconque des revendications précédentes, **caractérisé en ce que** le film (9, 109) comprend au moins une couche renfermant une polyoléflue.

4. Réservoir selon une quelconque des revendications précédentes, **caractérisé en ce que** le film (9) recouvre totalement l'accessoire (1) de manière à éliminer tout contact direct de celui-ci avec l'atmosphère extérieure au réservoir (4).

5. Réservoir selon une quelconque des revendications 1 à 3, **caractérisé en ce que** l'accessoire (101) comprend une canalisation (107) qui débouche à l'atmosphère extérieure au réservoir (103) et que le film (109) ne laisse sortir vers l'atmosphère extérieure que la canalisation (107).

6. Procédé pour fabriquer un réservoir à carburant (4, 103) en matière plastique muni d'au moins un accessoire (1,101) relié à l'espace intérieur du réservoir (4, 103) via au moins une ouverture dans la paroi de ce réservoir (4, 103), l'accessoire (1, 101) et/ou l'ouverture étant recouverts d'un dispositif de protection étanche, selon lequel on dispose par-dessus l'accessoire (1, 101) un film mince (9, 109) de structure multicouche comprenant an moins une couche barrière aux carburants, **caractérisé en ce que** l'on applique un film avec une couche directement en contact avec la paroi du réservoir (4, 103) qui comprend une composition opaque au rayonnement laser ou au rayonnement infrarouge et que l'on soude le film (9, 109) sur la totalité de sa périphérie sur le réservoir (4, 103) par balayage de cette zone périphérique au moyen d'un rayonnement laser ou infrarouge.

7. Procédé selon la revendication précédente, **caractérisé en ce que** l'on prédécoupe le film (9, 109) et qu'on le préforme par thermoformage, indépendamment du réservoir à carburant (4, 103), avant de réaliser la soudure sur le réservoir (4, 103) au moyen du rayonnement laser ou du rayonnement infrarouge.

8. Procédé selon la revendication 6 ou 7, **caractérisé en ce qu'**avant de réaliser la soudure, on plaque le film (9, 109) sur l'accessoire (1, 101) et la paroi du réservoir (4, 103) dans le voisinage de cet accessoire (1, 101) au moyen d'un courant d'air chaud.

## Patentansprüche

1. Kraftstoffbehälter (4, 103) aus Kunststoff, der mit zumindest einem Zubehör (1, 101) ausgestattet ist, das zumindest zum Teil an der Außenseite des Behälters (4, 103) angeordnet ist, wobei das Zubehör (1, 101) mit einer Schutzeinrichtung überzogen ist, um die Undurchlässigkeit der Anordnung aus Kraftstoffbehälter-Zubehör zu verbessern, wobei diese Einrichtung ein nachgiebiger Film (9, 109) mit mehrlagigem Aufbau ist, der zumindest eine für Kraftstoffe undurchlässige Schicht aufweist, die mit dem Behälter (4, 103) durch eine Schweißung vom Typ Laserstrahlschweißung oder Infrarotschweißung auf der Behälteraußenfläche über den gesamten Umfang des Filmes (9, 109) verbunden ist, **dadurch gekennzeichnet, daß** die Filmschicht (9, 109), die direkt mit der Wand des Behälters (4, 103) in Kontakt steht, eine Zusammensetzung hat, die für Laserstrahlung oder Infrarotstrahlung undurchlässig ist.

2. Behälter nach dem vorhergehenden Anspruch, **dadurch gekennzeichnet, daß** zumindest eine Schicht, der keine Trennschichtfunktion zukommt, am Umfang des Filmes (9, 109) über einen Abstand zumindest gleich der Breite der Schweißzone verdünnt ausgebildet ist.

3. Behälter nach einem der vorhergehenden Ansprüche, **dadurch gekennzeichnet, daß** der Film (9, 109) zumindest eine Schicht aufweist, die ein Polyolefin umfaßt.

4. Behälter nach einem der vorhergehenden Ansprüche, **dadurch gekennzeichnet, daß** der Film (9) die Gesamtheit des Zubehörs (1) derart bedeckt, daß jeder direkte Kontakt desselben mit der Außenatmosphäre des Behälters (4) vermieden wird.

5. Behälter nach einem der Ansprüche 1 bis 3, **dadurch gekennzeichnet, daß** das Zubehör (101) eine Leitung (107) aufweist, die zur Außenatmosphäre des Behälters (103) mündet, und daß der Film (109) nur diese Leitung (107) zur Atmosphäre austreten läßt.

6. Verfahren zum Herstellen eines Kraftstoffbehälters (4, 103) aus Kunststoff, der mit zumindest einem Zubehör (1, 101) ausgestattet ist, das mit dem Inneren des Behälters (4, 103) über zumindest eine Öffnung in der Wand des Behälters (4, 103) verbunden ist, wobei das Zubehör (1, 101) und/oder die Öffnung von einer dichten Schutzeinrichtung überdeckt ist, wobei man oberhalb des Zubehörs (1, 101) einen dünnen Film (9, 109) mit mehrlagigem Aufbau vorsieht, der zumindest eine für Kraftstoffe undurchlässige Schicht aufweist, **dadurch gekennzeichnet, daß** man einen Film mit einer Schicht direkt in Kontakt mit der Wand des Behälters (4, 103) aufbringt, wobei die Schicht eine für Laserstrahlung und Infrarotstrahlung undurchlässige Zusammensetzung hat, und daß man den Film (9, 109) über seinen gesamten Umfang an dem Behälter (4, 103) durch Bestreichen dieser Umfangszone mittels eines Laser- oder Infrarotstrahles anschweißt.

7. Verfahren nach dem vorhergehenden Anspruch, **dadurch gekennzeichnet, daß** der Film (9, 109) vorgeschnitten ist, und daß man ihn durch Thermoformung unabhängig von dem Kraftstoffbehälter (4, 103) vorformt, vor dem Ausbilden der Schweißung an dem Behälter (4, 103) mit Hilfe der Laser- oder Infrarotstrahlung.

8. Verfahren nach Anspruch 6 oder 7, **dadurch gekennzeichnet, daß** man den Film (9, 109) vor dem Ausführen der Schweißung an dem Zubehör (1, 101) und an der Wand des Behälters (4, 103) in der Nähe dieses Zubehörs (1, 101) mit Hilfe eines Heißluftstromes zur Anlage bringt.

## Claims

1. Plastic fuel tank (4, 103) provided with at least one accessory (1, 101) located at least partly on the outside of the tank (4, 103), the accessory (1, 101) being covered by a protective device that improves the impermeability of the tank/accessories assembly, this device being a flexible film (9, 109) of multilayer structure that includes at least one fuel barrier layer, and being fastened to the tank (4, 103) by welding it with a welding of the laser or infrared radiation welding type, to the outer surface of the said tank (4, 103) over the entire periphery of the film (1, 101), **characterized in that** the layer of the film (9, 109) which is directly in contact with the wall of the tank (4, 103) comprises a composition opaque to the laser radiation or to the infrared radiation.

2. Tank according to the preceding claim, **characterized in that** at least one layer that is not provided with a barrier function is thinned around the periphery of the film (9, 109) over a distance at least equal to the width of the welding region.

3. Tank according to any one of the preceding claims, **characterized in that** the film (9, 109) comprises at least one layer containing a polyolefin.

4. Tank according to any one of the preceding claims, **characterized in that** the film (9) completely covers the accessory (1) so as to remove any direct contact between the latter and the atmosphere outside the tank (4).

5. Tank according to any one of Claims 1 to 3, **characterized in that** the accessory (101) comprises a pipe (107) which opens the atmosphere external to the tank (103) and **in that** the film (109) allows only the pipe (107) to run out into the external atmosphere.

6. Process for manufacturing a plastic fuel tank (4, 103) provided with at least one accessory (1, 101) connected to the internal space of the tank (4, 103) via at least one opening in the wall of this tank (4, 103), the accessory (1, 101) and/or the opening being covered by an impermeable protective device, wherein there is placed, over the accessory (1, 101), a thin film (9, 109) of multilayer structure that includes at least one fuel barrier layer, **characterized in that** the layer of the film (9, 109) which is directly in contact with the wall of the tank (4, 103) comprises a composition opaque to the laser radiation or to the infrared radiation and **in that** the film (9, 109) is welded over its entire periphery to the tank (4, 103) by making laser or infrared radiation scan this peripheral region.

7. Process according to the preceding claim, **characterized in that** the film (9, 109) is cut and preformed by thermoforming, independently of the fuel tank (4, 103), before welding it to the tank (4, 103) by means of laser radiation or infrared radiation.

8. Process according to Claim 6 or 7, **characterized in that**, before carrying out the welding, the film (9, 109) is pressed against the accessory (1, 101) and the wall of the tank (4, 103) in the vicinity of this accessory (1, 101) by means of a stream of hot air.
